# EUROPÄISCHE PATENTSCHRIFT

(11) **EP 4 665 981 B1**
(45) Veröffentlichungstag und Bekanntmachung des Hinweises auf die Patenterteilung: **04.11.2026**
(21) Anmeldenummer: 24704752.5
(22) Anmeldetag: 09.02.2024
(51) Int. Cl.: F04C 2/107, F04C 15/00

(54) **EXZENTERSCHNECKENPUMPENVORRICHTUNG, PUMPENSYSTEM, AUSTRAGSSYSTEM UND VERWENDUNG**
ECCENTRIC SCREW PUMP DEVICE, PUMP SYSTEM, DISCHARGE SYSTEM AND USE OF
DISPOSITIF DE POMPE À VIS EXCENTRIQUE, SYSTÈME DE POMPE, SYSTÈME D'ÉVACUATION ET UTILISATION

(30) Priorität: 16.02.2023 DE 102023201352
(43) Veröffentlichungstag der Anmeldung: 24.12.2025
(73) Patentinhaber: INSTATIQ GmbH, 70567 Stuttgart (DE)
(72) Erfinder: BRACK, Peter, 72525 Münsingen (DE); HÄFNER, Jens, 73779 Deizisau (DE)
(74) Vertreter: Patentanwälte Ruff, Wilhelm, Beier, Dauster & Partner mbB
(86) Internationale Anmeldenummer: PCT/EP2024/053294
(87) Internationale Veröffentlichungsnummer: WO 2024/170426

(56) Entgegenhaltungen:
- DE-A1- 1 528 935
- DE-A1- 102021 205 936
- US-A- 4 185 839
- US-A1- 2009 252 630

## Beschreibung

### ANWENDUNGSGEBIET UND STAND DER TECHNIK

Die Erfindung betrifft eine Exzenterschneckenpumpenvorrichtung sowie ein Pumpensystem mit einer derartigen Exzenterschneckenpumpenvorrichtung. Darüber hinaus betrifft die Erfindung ein Austragssystem zum Austragen von Bau- und/oder Dickstoff, insbesondere zur Bildung eines Strangs von Bau- und/oder Dickstoff zum 3D-Druck eines Bauwerksteils. Ferner betrifft die Erfindung eine Verwendung einer derartigen Exzenterschneckenpumpenvorrichtung und/oder eines derartigen Pumpensystems und/oder eines derartigen Austragssystems.

Die Druckschriften US 4 185 839 A, US 2009/252630 A1 und DE 15 28 935 A1 lehren Exzenterschneckenpumpenvorrichtungen für ähnliche Anwendungen mit einer in den oder durch den Schneckenstator ragenden Triebwelle.

### AUFGABE UND LÖSUNG

Es ist eine Aufgabe der vorliegenden Erfindung, eine Exzenterschneckenpumpenvorrichtung, ein Pumpensystem mit einer derartigen Exzenterschneckenpumpenvorrichtung, ein Austragssystem zum Austragen von Bau- und/oder Dickstoff sowie eine Verwendung einer solchen Exzenterschneckenpumpenvorrichtung und/oder eines solchen Pumpensystems und/oder eines solchen Austragssystems zu schaffen, die verbesserte Eigenschaften aufweisen.

Diese Aufgabe wird durch die Gegenstände der unabhängigen Patentansprüche gelöst. Bevorzugte Ausführungsformen sind Gegenstand der abhängigen Patentansprüche.

Eine erfindungsgemäße Exzenterschneckenpumpenvorrichtung weist einen Schneckenstator sowie einen Schneckenrotor auf. Der Schneckenrotor ist in dem Schneckenstator beweglich gelagert. Der Schneckenrotor kann in dem Schneckenstator translations- und/oder radial beweglich gelagert und/oder angeordnet sein. Die Exzenterschneckenpumpenvorrichtung hat zudem eine drehantreibbare Triebwelle zum Aufprägen einer Rotationsbewegung des Schneckenrotors relativ zum Schneckenstator zum Fördern von Bau- und/oder Dickstoff durch den Schneckenstator hindurch. Durch die aufgeprägte Rotationsbewegung kann also Bau- und/oder Dickstoff durch den Schneckenstator hindurch gefördert werden. Dabei ragt die Triebwelle, insbesondere axial schräg, in den Schneckenstator hinein oder durch den Schneckenstator hindurch. "Axial schräg" kann sich dabei auf eine wenigstens bereichsweise geneigte Erstreckung der Triebwelle relativ zu einer Zentralachse der Exzenterschneckenpumpenvorrichtung beziehen. Der Schneckenstator kann die Triebwelle wenigstens bereichsweise entlang einer axialen Richtung der Exzenterschneckenpumpenvorrichtung überlappen. Der Schneckenstator und die Triebwelle können wenigstens bereichsweise geschachtelt angeordnet sein. Die erfindungsgemäße Exzenterschneckenpumpenvorrichtung baut entlang der axialen Richtung besonders kompakt. Insbesondere kann ein Einlauf- oder Auslaufraum der Exzenterschneckenpumpenvorrichtung, welcher sich zum Zuführen von Bau- und/oder Dickstoff zum Schneckenrotor an den Schneckenrotor anschließt, entlang der axialen Richtung besonders kompakt, insbesondere kurz, realisiert werden, indem die Triebwelle wenigstens teilweise in dem Schneckenstator aufgenommen ist. Ein besonders kompakter, insbesondere kurzer, Ein- oder Auslaufraum führt zu einem besonders geringen Reinigungsaufwand beim Reinigen der Exzenterschneckenpumpenvorrichtung. Zudem kann auf diese Weise ermöglicht werden, dass ein Bereich, von welchem aus die Triebwelle in den Schneckenstator hineinragt, besonders gut, insbesondere vollständig, durchströmt und/oder reinigbar sein kann. Somit wird ermöglicht, dass mindestens ein Bereich, in welchem Bau- und/oder Dickstoff verweilen kann (Totraum), reduziert werden kann. In anderen Worten: Auf diese Weise wird ermöglicht, dass eine Verweildauer des Bau- und/oder Dickstoffs in der Exzenterschneckenpumpenvorrichtung kurz und/oder bekannt sein kann. Damit einhergehend lässt sich ein Risiko eines Überalterns und/oder sogar eines Anhaftens beziehungsweise eines Ablagerns und/oder eines Aushärtens beziehungsweise eines Anbackens des Bau- und/oder Dickstoffs in der Exzenterschneckenpumpenvorrichtung reduzieren oder sogar vollständig vermeiden. Folglich wird ermöglicht, dass eine gleichbleibende und/oder bekannte Qualität des Bau- und/oder Dickstoffs sichergestellt werden kann. Zusätzlich oder alternativ kann auf diese Weise ermöglicht werden, dass ein Risiko eines Anwachsens von Steinen mit zu großen Ausmaßen in der Exzenterschneckenpumpenvorrichtung reduziert oder sogar vollständig vermieden werden kann. Insgesamt lässt sich somit ein Risiko eines Blockierens reduzieren oder sogar vollständig vermeiden. Entsprechend ergibt sich eine besonders zuverlässige und sicher betreibbare Exzenterschneckenpumpenvorrichtung.

Der Baustoff kann Beton, insbesondere Frischbeton, sein. Der Baustoff kann thixotrop und/oder stichfest sein. Der Baustoff kann formstabil und/oder steif sein. Der Baustoff kann schnell aushärtend sein. Zusätzlich oder alternativ kann der Baustoff Mörtel, Zement, Estrich und/oder Putz umfassen oder sein. Weiter zusätzlich oder alternativ kann der Dickstoff Schlamm sein. Weiter zusätzlich oder alternativ kann der Bau- und/oder Dickstoff mit einer Körnung, insbesondere mit einem Größtkorn, von minimal 2 mm, insbesondere minimal 8 mm, und/oder maximal 50 mm sein.

Der Begriff "drehbeweglich" kann synonym für den Begriff "rotationsbeweglich" verwendet werden.

Der Begriff "drehantreibbar" kann synonym für den Begriff "rotationsantreibbar" verwendet werden. Etwas, das "drehantreibbar" oder "drehantreibbar ausgebildet" ist, kann dazu eingerichtet sein, insbesondere mittels einer Antriebseinrichtung, in Rotationsbewegung versetzt zu werden.

Der Begriff "Raum" kann synonym für den Begriff "Kammer" verwendet werden.

Die Begriffe "Eintritt" oder "Zulauf" können untereinander und für den Begriff "Einlauf" synonym verwendet werden. Zusätzlich oder alternativ kann die Formulierung "zur Ansaugung" synonym für die Formulierung "zum Einlauf" verwendet werden.

Die Begriffe "Austritt" oder "Ablauf" können untereinander und für den Begriff "Auslauf" synonym verwendet werden. Zusätzlich oder alternativ kann die Formulierung "zur Verdrängung" synonym für die Formulierung "zum Auslauf" verwendet werden.

Der Begriff "konfiguriert" kann für den Begriff "ausgebildet" synonym verwendet werden.

Die Begriffe "umfasst" oder "hat" können untereinander und für den Begriff "aufweist" synonym verwendet werden.

"Kontrollieren" kann vorliegend "steuern" und/oder "regeln" bedeuten.

In Ausgestaltung der Erfindung ragt die Triebwelle, insbesondere axial schräg, in den Schneckenrotor hinein oder durch den Schneckenrotor hindurch. Der Schneckenrotor und die Triebwelle können also geschachtelt angeordnet sein. Insbesondere ist der Schneckenrotor wenigstens baustoffdicht und/oder dickstoffdicht verschlossen. Es ergibt sich eine, insbesondere axial, besonders kompakt bauende Exzenterschneckenpumpenvorrichtung.

In weiterer Ausgestaltung der Erfindung weist die Exzenterschneckenpumpenvorrichtung eine Anbindungseinrichtung auf. Die Anbindungseinrichtung bindet ein Antriebsende der drehantreibbaren Triebwelle, insbesondere kardanisch und/oder winkeltolerant, an den Schneckenrotor an. Insbesondere lagert die Anbindungseinrichtung das Abtriebsende, insbesondere kardanisch und/oder winkeltolerant, an dem Schneckenrotor. Somit kann der Schneckenrotor in eine exzentrische Rotationsbewegung relativ zum Schneckenstator versetzt werden.

In weiterer Ausgestaltung der Erfindung weist der Schneckenrotor eine erste Stirnseite und eine der ersten Stirnseite axial gegenüberliegende zweite Stirnseite auf. Dabei hat die erste Stirnseite eine Öffnung, mittels welcher ein axial erstreckter Innenraum des Schneckenrotors zum bereichsweisen Aufnehmen der Triebwelle geöffnet ist. Dies begünstigt eine geschachtelte Anordnung von Schneckenrotor und Triebwelle.

In weiterer Ausgestaltung der Erfindung ist die Anbindungseinrichtung im, insbesondere axialen, Abstand zu der ersten Stirnseite angeordnet. Dabei kann die Anbindungseinrichtung an der zweiten Stirnseite und/oder innerhalb des Innenraums angeordnet sein. Es ergibt sich eine axial besonders kurz bauende Exzenterschneckenpumpenvorrichtung.

In weiterer Ausgestaltung der Erfindung hat die zweite Stirnseite eine Montageöffnung, mittels welcher der Innenraum der ersten Stirnseite axial gegenüberliegend durchgangartig geöffnet ist. Insbesondere weist die Exzenterschneckenpumpenvorrichtung eine Abdeckung auf, die kappenartig ausgebildet sein kann. Insbesondere ist die Montageöffnung mittels der Abdeckung wenigstens baustoffdicht und/oder dickstoffdicht verschlossen. Mittels der Montageöffnung kann eine Montierbarkeit, insbesondere bei der Erzeugung einer Verbindung zwischen Schneckenrotor und Triebwelle, verbessert werden. Insbesondere erlaubt die Montageöffnung eine verbesserte Zugänglichkeit des Innenraums des Schneckenrotors.

Gemäß der Erfindung weist die Exzenterschneckenpumpenvorrichtung eine, insbesondere ringförmige, Dichtungseinrichtung auf. Die Dichtungseinrichtung ist an dem Schneckenrotor und/oder an der Triebwelle, insbesondere umlaufend und/oder radial und/oder axial angelegt. Die Dichtungseinrichtung wirkt vorteilhaft einem Eindringen von Bau- und/oder Dickstoff in den Innenraum des Schneckenrotors entgegen oder verhindert ein solches Eindringen sogar vollständig.

Ein derartiges Eindringen könnte zu erhöhtem Verschleiß des Schneckenrotors und/oder der Triebwelle und/oder der Anbindungseinrichtung führen, unter Umständen sogar zu einem Blockieren. Es ergibt sich also eine besonders zuverlässige Exzenterschneckenpumpenvorrichtung.

Zweckmäßig weist die Exzenterschneckenpumpenvorrichtung eine, insbesondere ringförmige, Dichtungseinrichtung auf, die an dem Schneckenrotor und an einer Wandung der Exzenterschneckenpumpenvorrichtung, insbesondere umlaufend und/oder radial und/oder axial, angelegt ist. Die Wandung ist dabei an dem Schneckenstator befestigt und begrenzt einen Ein- oder Auslaufraum der Exzenterschneckenpumpenvorrichtung zum Ein- oder Auslauf von Bau- und/oder Dickstoff in den Schneckenstator hinein oder aus dem Schneckenstator heraus. Die Dichtungseinrichtung wirkt ebenfalls einem Eindringen von Bau- und/oder Dickstoff in den Innenraum des Schneckenrotors entgegen oder verhindert dieses sogar vollständig.

Erfindungsgemäß ist der axial erstreckte Innenraum des Schneckenrotors zum bereichsweisen Aufnehmen der Triebwelle ausgebildet und mit einem inkompressiblen Medium, insbesondere mit einer Flüssigkeit, gefüllt. Das inkompressible Medium kann insbesondere so ausgebildet sein, dass es bei Druckeinwirkung im Wesentlichen keine Volumenänderung erfährt. Mittels des inkompressiblen Mediums kann die Dichtungseinrichtung, insbesondere axial, abgestützt sein. Dies kann eine Zuverlässigkeit der Dichtungseinrichtung begünstigen.

In weiterer Ausgestaltung der Erfindung ist die Dichtungseinrichtung, insbesondere radial und/oder axial, elastisch verformbar ausgebildet, insbesondere um einem mit dem Aufprägen der Rotationsbewegung einhergehenden Taumeln der Triebwelle relativ zum Schneckenrotor nachzugeben. Insbesondere weist die Dichtungseinrichtung ein, insbesondere geschlossenporiges, Schaumstoffmaterial auf oder besteht aus einem solchen Schaumstoffmaterial. Alternativ oder zusätzlich kann die Dichtungseinrichtung faltenbalgartig ausgebildet sein. Die Dichtungseinrichtung kann als Triebwellenmanschette ausgebildet sein.

In weiterer Ausgestaltung der Erfindung ist ein, insbesondere lichter, Innendurchmesser des Schneckenrotors, insbesondere an der Öffnung der ersten Stirnseite, größer als ein Außendurchmesser der Triebwelle. Dabei kann ein Verhältnis des Innendurchmessers zum Außendurchmesser minimal 1,1 bis maximal 5,0, insbesondere minimal 1,5 bis maximal 2,5, betragen. Auf diese Weise lässt sich ein ausreichendes Spiel für das Taumeln der Triebwelle relativ zum Schneckenrotor bereitstellen.

In weiterer Ausgestaltung der Erfindung weist die Triebwelle ein, insbesondere um eine Zentralachse der Exzenterschneckenpumpenvorrichtung drehantreibbares, Antriebsende zur Antriebskopplung auf. Die Triebwelle hat zudem ein, insbesondere das, Abtriebsende, welches dem Antriebsende gegenüberliegend angeordnet ist und welches zur, insbesondere anlenkenden, Anbindung an den Schneckenrotor dient. Dabei sind das Antriebsende und das Abtriebsende miteinander mittels einer Gelenkwelle der Triebwelle, insbesondere aufweisend wenigstens ein Kardangelenk, und/oder mittels eines winkeltoleranten elastisch verformbaren Abschnitts der Triebwelle, insbesondere aufweisend eine Hardyscheibe, verbunden. Das Antriebsende und das Abtriebsende sind dabei miteinander mittels der Gelenkwelle und/oder des winkeltoleranten elastisch verformbaren Abschnitts der Triebwelle verbunden, um einen radialen Versatz zwischen Antriebsende und/oder Abtriebsende auszugleichen, wobei der radiale Versatz aus einer Exzentrizität des Schneckenrotors, insbesondere einer Eigenrotationsachse des Schneckenrotors, relativ zum Schneckenstator resultiert. Die Gelenkwelle kann ein Abschnitt der Triebwelle sein.

Zweckmäßig ist die Triebwelle wenigstens abschnittsweise, insbesondere in einem Abschnitt, welcher in den Schneckenrotor und/oder den Schneckenstator ragt, um einen Winkel von minimal 0,1° bis maximal 6°, insbesondere von minimal 1° bis maximal 3°, gegenüber der Zentralachse angestellt, um den radialen Versatz zu überbrücken. Unter diesem Winkel kann die Triebwelle axial schräg in den Schneckenstator hinein- oder durch den Schneckenstator hindurchragen. Der vorgenannte Winkel kann zusammen mit einer Exzentrizität des Schneckenrotors relativ zum Schneckenstator eine minimal realisierbare axiale Erstreckung der Exzenterschneckenpumpenvorrichtung bedingen. Diese minimal realisierbare axiale Erstreckung kann dadurch, dass die Triebwelle axial schräg in den Schneckenstator und/oder den Schneckenrotor ragt, besonders gering ausfallen.

In weiterer Ausgestaltung der Erfindung ist die Rotationsbewegung des Schneckenrotors relativ zum Schneckenstator mittels der Triebwelle derart aufprägbar, dass bei Drehantreiben des Antriebsendes um die Zentralachse der Exzenterschneckenpumpenvorrichtung der Schneckenrotor eine Eigenrotation erfährt, während der Schneckenrotor um die Zentralachse, insbesondere in radialem Abstand zur Zentralachse exzentrisch, umläuft.

In weiterer Ausgestaltung der Erfindung weist die Exzenterschneckenpumpenvorrichtung eine Antriebseinrichtung zum Antreiben des Schneckenrotors mittels der Triebwelle auf. Dabei ist die Antriebseinrichtung insbesondere mit einem, insbesondere dem, Antriebsende der Triebwelle so drehantriebsverbunden, dass das Antriebsende mittels der Antriebseinrichtung um eine Zentralachse der Exzenterschneckenpumpenvorrichtung drehantreibbar ist.

Ein erfindungsgemäßes Pumpensystem weist eine erfindungsgemäße Exzenterschneckenpumpenvorrichtung im Sinne der vorstehenden Beschreibung auf. Die voranstehend erläuterten Vorteile der Exzenterschneckenpumpenvorrichtung übertragen sich entsprechend auf das erfindungsgemäße Pumpensystem mit einer derartigen Exzenterschneckenpumpenvorrichtung. Das Pumpensystem hat ferner eine Zufuhrpumpe, wobei die Zufuhrpumpe zum Fördern von Bau- und/oder Dickstoff zu der Exzenterschneckenpumpenvorrichtung, insbesondere zum Ein- oder Auslaufraum der Exzenterschneckenpumpenvorrichtung, ausgebildet ist. Insbesondere ist das Pumpensystem von der Zufuhrpumpe bis zu der Exzenterschneckenpumpenvorrichtung, insbesondere bau- und/oder dickstoffdicht, geschlossen.

Ein erfindungsgemäßes Austragssystem dient zum Austragen von Bau- und/oder Dickstoff, insbesondere zur Bildung eines Strangs von Bau- und/oder Dickstoff zum 3D-Druck eines Bauwerksteils. Dabei weist das Austragssystem eine Austragsöffnung auf, wobei die Austragsöffnung zum Austrag von Bau- und/oder Dickstoff, insbesondere zur Bildung des Strangs, aus dem Austragssystem heraus ausgebildet ist. Das Austragssystem hat ferner eine erfindungsgemäße Exzenterschneckenpumpenvorrichtung und/oder ein erfindungsgemäßes Pumpensystem, wie voranstehend beschrieben. Die vorstehend aufgezeigten Vorteile der erfindungsgemäßen Exzenterschneckenpumpenvorrichtung und/oder des erfindungsgemäßen Pumpensystems übertragen sich entsprechend auf das erfindungsgemäße Austragssystem mit einer derartigen Exzenterschneckenpumpenvorrichtung und/oder mit einem derartigen Pumpensystem. Dabei ist die Exzenterschneckenpumpenvorrichtung zur Förderung von Bau- und/oder Dickstoff zu der Austragsöffnung, insbesondere zur Dosierung von Bau- und/oder Dickstoff aus dem Austragssystem heraus, ausgebildet.

Gemäß der Erfindung wird eine erfindungsgemäße Exzenterschneckenpumpenvorrichtung und/oder ein erfindungsgemäßes Pumpensystem und/oder ein erfindungsgemäßes Austragssystem, wie voranstehend beschrieben, verwendet, insbesondere zum Austrag von Bau- und/oder Dickstoff, insbesondere zum Bau eines Bauwerksteils, insbesondere zur Bildung eines Strangs von Bau- und/oder Dickstoff zum 3D-Druck des Bauwerksteils.

### KURZBESCHREIBUNG DER ZEICHNUNGEN

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind. Dabei beziehen sich gleiche Bezugszeichen auf gleiche oder ähnliche oder funktional gleiche Bauteile.
- Fig. 1: zeigt einen schematischen Aufbau einer Ausführungsform eines erfindungsgemäßen Austragssystems mit einer Ausführungsform eines erfindungsgemäßen Pumpensystems, wobei das Pumpensystem eine Ausführungsform einer Exzenterschneckenpumpenvorrichtung aufweist, welche in einem schematischen Axialschnitt entlang ihrer Zentralachse dargestellt ist und welche gemäß der Erfindung verwendet wird,
- Fig. 2: einen schematischen Aufbau einer weiteren Ausführungsform eines erfindungsgemäßen Austragssystems mit einer in einem Längsschnitt gezeigten weiteren Ausführungsform der erfindungsgemäßen Exzenterschneckenpumpenvorrichtung in erfindungsgemäßer Verwendung, und
- Fig. 3: in schematischer Perspektivdarstellung eine weitere Ausführungsform eines erfindungsgemäßen Austragssystems mit einer weiteren Ausführungsform einer erfindungsgemäßen Exzenterschneckenpumpenvorrichtung in erfindungsgemäßer Verwendung.

### DETAILLIERTE BESCHREIBUNG DER AUSFÜHRUNGSBEISPIELE

Ein erfindungsgemäßes Austragssystem 100 dient zum Austragen von Bau- und/oder Dickstoff. Das Austragssystem 100 ist beispielsweise zum Austragen von Baustoff und/oder Dickstoff zur Bildung eines Strangs von Bau- und/oder Dickstoff zum 3D-Druck eines Bauwerksteils ausgebildet. Der Strang kann in Raupenform schichtweise abgelegt werden, um das Bauwerksteil schichtweise und/oder schalungsfrei aufzubauen. Dabei weist das Austragssystem 100 eine Austragsöffnung 101 auf. Die Austragsöffnung 101 dient einem Austrag von Bau- und/oder Dickstoff aus dem Austragssystem 100 heraus, beispielsweise um den Strang von Bau- und/oder Dickstoff zu bilden. Das Austragssystem 100 weist zudem eine erfindungsgemäße Exzenterschneckenpumpenvorrichtung 1 auf. Beispielsweise ist die Exzenterschneckenpumpenvorrichtung 1 Bestandteil eines erfindungsgemäßen Pumpensystems 50. Dabei ist die Exzenterschneckenpumpenvorrichtung 1 zur Förderung von Bau- und/oder Dickstoff zu der Austragsöffnung 101 ausgebildet, beispielsweise um den Austrag von Bau- und/oder Dickstoff aus dem Austragssystem 100 heraus zu dosieren.

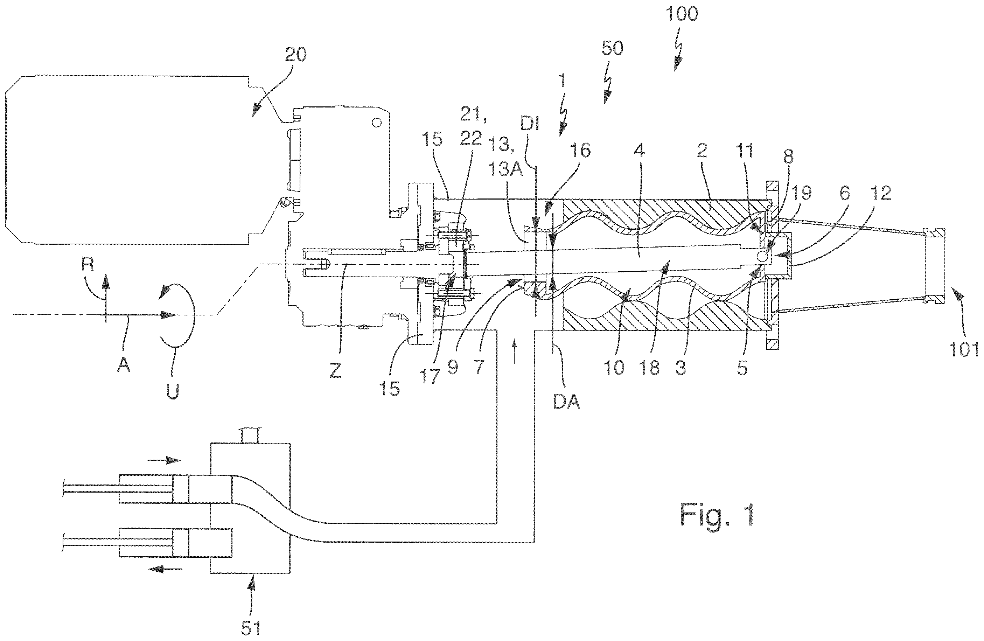

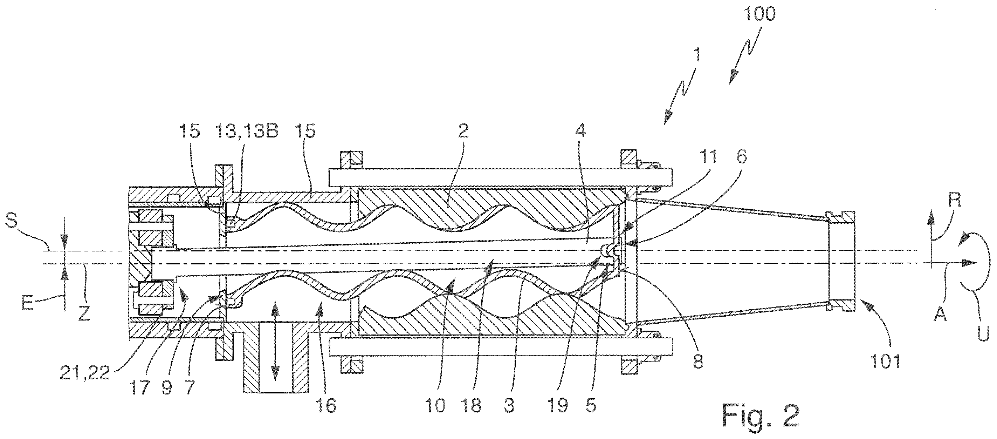

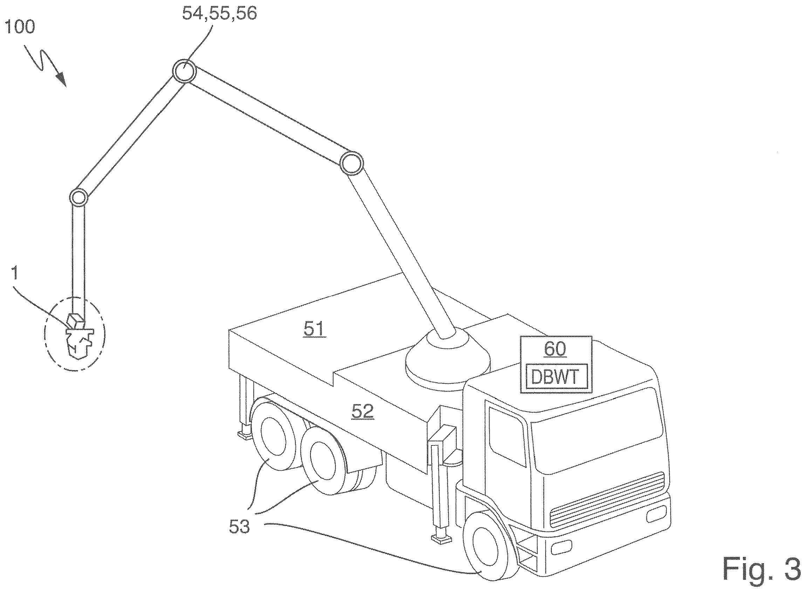

Das Pumpensystem 50 weist beispielsweise eine Zufuhrpumpe 51 auf. Dabei ist die Zufuhrpumpe 51 zum Fördern von Bau- und/oder Dickstoff zu der Exzenterschneckenpumpenvorrichtung 1 ausgebildet. Beispielsweise ist die Zufuhrpumpe 51 dazu ausgebildet, den Bau- und/oder Dickstoff zu einem Ein- oder Auslaufraum 16 der Exzenterschneckenpumpenvorrichtung 1 zu fördern. Beispielsweise ist das Pumpensystem 50 von der Zufuhrpumpe 51 bis zu der Exzenterschneckenpumpenvorrichtung 1 geschlossen. Im Beispiel der Fig. 2 hat das Pumpensystem 50 keine Zufuhrpumpe 51, wohingegen gemäß den Fig. 1 und 3 eine derartige Zufuhrpumpe vorgesehen ist.

Die Zufuhrpumpe 51 kann Förderzylinder mit volumenvariablen Förderräumen aufweisen. Zur, insbesondere gegenläufigen, Änderung der Volumina der Förderräume können die Förderzylinder jeweils einen verstellbaren Förderkolben aufweisen. Die Zufuhrpumpe 51 kann zudem eine S-förmig geformte Rohrweiche, insbesondere ein S-Rohr, umfassen, welche einenends fluidleitend mit einem als Zufuhrpumpenausgang fungierenden Druckstutzen verbunden ist. Die Rohrweiche kann in einem von oben her mit Bau- und/oder Dickstoff befüllbaren Vorratsraum zum Bevorraten von Bau- und/oder Dickstoff angeordnet sein. Dabei kann die Rohrweiche innerhalb des Vorratsraums einenends an dem Druckstutzen drehbar gelagert sein. Die volumenvariablen Förderräume können in den Vorratsraum münden. Die Rohrweiche kann im Vorratsraum derart relativ zu den Förderräumen verschwenkbar sein, dass sie abwechselnd mit einem der Förderräume fluidleitend verbindbar ist. Auf diese Weise kann durch das Gegenspiel des Verschwenkens der Rohrweiche und einer Volumenänderung der Förderräume in dem Vorratsraum befindlicher Bau- und/oder Dickstoff mittels der Förderräume abwechselnd angesaugt und über die Förderräume durch die Rohrweiche hindurch über den Druckstutzen nach außen gepumpt werden. Im Vorratsraum der Zufuhrpumpe 51 kann ein Rührwerk angeordnet sein. Der Druckstutzen kann mit dem Ein- oder Auslaufraum 16 der Exzenterschneckenpumpenvorrichtung 1 baustoff- und/oder dickstoffleitend kommunizieren.

Die Fig. 1 bis 3 zeigen die Exzenterschneckenpumpenvorrichtung 1 und/oder das Pumpensystem 50 und/oder das Austragssystem 100 in erfindungsgemäßer Verwendung. Gemäß dieser Verwendung wird die Exzenterschneckenpumpenvorrichtung 1 und/oder das Pumpensystem 50 und/oder das Austragssystem 100 zum Austrag von Bau- und/oder Dickstoff verwendet. Insbesondere wird die Exzenterschneckenpumpenvorrichtung 1 und/oder das Pumpensystem 50 und/oder das Austragssystem 100 zum Bau eines Bauwerksteils verwendet. Beispielsweise wird die Exzenterschneckenpumpenvorrichtung 1 und/oder das Pumpensystem 50 und/oder das Austragssystem 100 zur Bildung eines Strangs von Bau- und/oder Dickstoff zum 3D-Druck, d. h. zur additiven Fertigung, des Bauwerksteils verwendet.

Die Exzenterschneckenpumpenvorrichtung 1 weist einen Schneckenstator 2 auf. Der Schneckenstator 2 kann ein elastisches Material aufweisen oder aus einem solchen elastischen Material bestehen. Zudem weist die Exzenterschneckenpumpenvorrichtung 1 einen Schneckenrotor 3 auf, welcher in dem Schneckenstator 2 beweglich gelagert ist. Der Schneckenrotor 3 kann ein metallisches Material aufweisen oder aus einem solchen metallischen Material bestehen. Das metallische Material kann ein Metall oder mehrere Metalle aufweisen oder aus einem Metall oder aus mehreren Metallen bestehen. Der Schneckenrotor 3 kann eine außenseitige Beschichtung aufweisen, die beispielsweise mittels eines thermischen Beschichtungsverfahrens hergestellt ist. Beispielsweise kann die Beschichtung mittels Flammspritzens und/oder mittels Plasma-Pulver-Auftragsschweißen, insbesondere mittels eines "enhanced Plasma Transferred Arc" (ePTA-) Prozesses, erzeugt sein. Beispielsweise kann das Material des Schneckenrotors 3 innenseitig zäher als außenseitig und/oder außenseitig härter als innenseitig sein. Alternativ oder zusätzlich kann der Schneckenrotor 3 ein Verbundmaterial aufweisen oder aus einem Verbundmaterial bestehen. Der Schneckenrotor 3 kann eine außenseitige Keramikbeschichtung aufweisen.

Ferner weist die Exzenterschneckenpumpenvorrichtung 1 eine drehantreibbare Triebwelle 4 auf. Die Triebwelle 4 dient primär einem Aufprägen einer Rotationsbewegung des Schneckenrotors 3 relativ zum Schneckenstator 2. Infolge der aufgeprägten Rotationsbewegung des Schneckenrotors 3 relativ zum Schneckenstator 2 ist der Bau- und/oder Dickstoff durch den Schneckenstator 2 hindurch förderbar. Dabei ragt die Triebwelle 4 in den Schneckenstator 2 hinein oder durch den Schneckenstator 2 hindurch. Beispielsweise ragt die Triebwelle 4 axial schräg in den Schneckenstator 2 hinein oder durch den Schneckenstator 2 hindurch. "Axial schräg" kann dabei bedeuten, dass die Triebwelle 4 gegenüber einer Zentralachse Z der Exzenterschneckenpumpenvorrichtung 1 wenigstens bereichsweise geneigt oder angestellt ist. Beispielsweise ist die Triebwelle 4 wenigstens abschnittsweise um einen Winkel von minimal 0,1° bis maximal 6°, insbesondere von minimal 1° bis maximal 3°, gegenüber der Zentralachse Z angestellt, um einen radialen Versatz zwischen dem Schneckenrotor 3 und dem Schneckenstator 2 zu überbrücken. Unter diesem Winkel kann die Triebwelle 4 axial schräg in den Schneckenstator 2 ragen. Die Triebwelle 4 kann zudem, insbesondere axial schräg, in den Schneckenstator 2 hineinragen. Gemäß den gezeigten Ausführungsformen ragt die Triebwelle 4 axial schräg durch den Schneckenrotor 3 hindurch. Insbesondere ragt die Triebwelle 4 in einen Überlappungsbereich, in welchem der Schneckenstator 2 und der Schneckenrotor 3 einander entlang der Zentralachse Z geschachtelt überlappen. Dabei ist der Schneckenrotor 3 beispielsweise wenigstens baustoffdicht und/oder dickstoffdicht verschlossen. Durch besagten Verschluss des Schneckenrotors 3 kann eine aus der aufgeprägten Rotationsbewegung resultierende Druckdifferenz zwischen zwei einander entlang der Zentralachse Z gegenüberliegenden Enden des Schneckenstators 2 erzeugt werden.

Die Exzenterschneckenpumpenvorrichtung 1 weist vorliegend eine Anbindungseinrichtung 5 auf. Die Triebwelle 4 weist ein Abtriebsende 6 auf. Das Abtriebsende 6 ist mittels der Anbindungseinrichtung 5 an dem Schneckenrotor 3 angebunden. Insbesondere lagert die Anbindungseinrichtung 5 das Abtriebsende 6 der drehantreibbaren Triebwelle 4 an dem Schneckenrotor 3. Das Abtriebsende 6 kann mittels der Anbindungseinrichtung 5 kardanisch und/oder winkeltolerant an den Schneckenrotor 3 angebunden sein.

Der Schneckenrotor 3 weist eine erste Stirnseite 7 auf. Der Schneckenrotor 3 weist zudem eine zweite Stirnseite 8 auf, die der ersten Stirnseite 7 axial gegenüberliegend angeordnet ist. Axial bezieht sich dabei auf eine axiale Richtung A, entlang welcher die Zentralachse Z, insbesondere parallel, verläuft. Senkrecht zur axialen Richtung A verläuft eine radiale Richtung R. Um die Zentralachse Z, insbesondere innerhalb einer senkrecht zur Zentralachse Z orientierten Ebene, verläuft eine Umfangsrichtung U. Die Stirnseiten 7, 8 können an einander gegenüberliegenden Stirnenden des Schneckenrotors 3 angeordnet sein und/oder derartige Stirnenden ausbilden. Dabei weist die erste Stirnseite 7 eine Öffnung 9 auf. Der Schneckenrotor 3 ist beispielsweise wenigstens bereichsweise hohl ausgebildet. Der Schneckenrotor 3 weist vorliegend einen axial erstreckten Innenraum 10 auf, der einem wenigstens bereichsweisen Aufnehmen der Triebwelle 4 dient. Der Innenraum 10 ist mittels der Öffnung 9 der ersten Stirnseite 7 geöffnet. Dabei ist die Anbindungseinrichtung 5 vorliegend in einem Abstand zu der ersten Stirnseite 7 angeordnet. Bei diesem Abstand zwischen Anbindungseinrichtung 5 und erster Stirnseite 7 kann es sich um einen axialen Abstand handeln. Die Anbindungseinrichtung 5 ist vorliegend an der zweiten Stirnseite 8 innerhalb des Innenraums 10 angeordnet.

Die der ersten Stirnseite 7 gegenüberliegende zweite Stirnseite 8 des Schneckenrotors 3 weist eine Montageöffnung 11 auf. Mittels dieser Montageöffnung 11 ist der Innenraum 10 der ersten Stirnseite 7 axial gegenüberliegend durchgangartig geöffnet. Gemäß der Ausführungsform nach Fig. 1 weist die Exzenterschneckenpumpenvorrichtung 1 eine Abdeckung 12 auf. Die Abdeckung 12 ist kappenartig und/oder stopfenartig ausgebildet. Dabei ist die Montageöffnung 11 mittels der kappenartigen Abdeckung 12 wenigstens baustoffdicht und/oder dickstoffdicht verschlossen.

Gemäß der Ausführungsform nach Fig. 1 weist die Exzenterschneckenpumpenvorrichtung 1 eine Dichtungseinrichtung 13, 13A auf. Die Dichtungseinrichtung 13, 13A ist ringförmig ausgebildet. Die Dichtungseinrichtung 13, 13A ist an dem Schneckenrotor 3 und an der Triebwelle 4 angelegt. Die Dichtungseinrichtung 13, 13A ist zudem an der Triebwelle 4 angelegt. Dabei ist die Dichtungseinrichtung 13, 13A umlaufend und radial an den Schneckenrotor 3 und an der Triebwelle 4 angelegt. Die Dichtungseinrichtung 13, 13A ist in einem radialen Spalt zwischen dem Schneckenrotor 3 und der Triebwelle 4 angeordnet.

Die Dichtungseinrichtung 13, 13A kann axial an dem Schneckenrotor 3 und/oder an der Triebwelle 4 angelegt sein.

Bei der Ausführungsform nach der Fig. 2 weist die Exzenterschneckenpumpenvorrichtung 1 eine andere Dichtungseinrichtung 13, 13B auf. Die andere Dichtungseinrichtung 13, 13B ist beispielsweise ringförmig ausgebildet. Die Exzenterschneckenpumpenvorrichtung 1 hat eine Wandung 15. Die Wandung 15 ist an dem Schneckenstator 2 befestigt. Die Wandung 15 begrenzt einen Ein- oder Auslaufraum 16 der Exzenterschneckenpumpenvorrichtung 1 zum Ein- oder Auslauf von Bau- und/oder Dickstoff in den Schneckenstator 2 hinein oder aus dem Schneckenstator 2 heraus. Die Triebwelle 4 ist bereichsweise innerhalb des Ein- oder Auslaufraums 16 angeordnet. Die andere Dichtungseinrichtung 13, 13B ist an dem Schneckenrotor 3 und an der Wandung 15 angelegt. Beispielsweise ist die andere Dichtungseinrichtung 13, 13B axial an dem Schneckenrotor 3 und an der Wandung 15 angelegt. Die andere Dichtungseinrichtung 13, 13B ist vorliegend axial zwischen der Wandung 15 und dem Schneckenrotor 3 angelegt. Die Dichtungseinrichtung 13, 13B kann radial und/oder umlaufend an dem Schneckenrotor 3 und an der Wandung 15 angelegt sein.

Der axial erstreckte und zum Aufnehmen wenigstens eines Bereichs der Triebwelle 4 ausgebildete Innenraum 10 des Schneckenrotors 3, ist beispielsweise mit einem inkompressiblen Medium gefüllt. Das inkompressible Medium erfährt vorzugsweise keine druckabhängige Volumenänderung. Das inkompressible Medium kann also beispielsweise kaum oder nicht verdichtet werden. Vorzugsweise ist das inkompressible Medium eine Flüssigkeit. Mittels des inkompressiblen Mediums kann ein Widerlager oder eine Abstützung der Dichtungseinrichtung(en) 13, 13A, 13B gegenüber dem Ein- oder Auslaufraum 16 bereitgestellt sein.

Die Dichtungseinrichtung 13, das heißt die Dichtungseinrichtung 13A und/oder die andere Dichtungseinrichtung 13B, ist elastisch verformbar ausgebildet. Beispielsweise kann die Dichtungseinrichtung 13 radial und/oder axial elastisch verformbar ausgebildet sein. Die Dichtungseinrichtung 13 ist elastisch verformbar, um einem mit dem Aufprägen der Rotationsbewegung einhergehenden Taumeln der Triebwelle 4 relativ zum Schneckenrotor 3 und/oder relativ zur schneckenstatorfesten Wandung 15 nachzugeben. Dabei kann die Dichtungseinrichtung 13 ein Schaumstoffmaterial aufweisen oder aus einem derartigen Schaumstoffmaterial bestehen. Das Schaumstoffmaterial kann geschlossenporig ausgebildet sein. Die Dichtungseinrichtung 13 kann faltenbalgartig ausgebildet sein. Beispielsweise ist die Dichtungseinrichtung 13 als Dichtmanschette, insbesondere als Triebwellenmanschette, ausgebildet. Die Dichtungseinrichtung kann ein Elastomer aufweisen oder aus einem Elastomer bestehen. Die Dichtungseinrichtung 13 kann einen Gummiwerkstoff aufweisen oder aus einem Gummiwerkstoff bestehen.

Der Schneckenrotor 3 weist einen Innendurchmesser DI auf. Bei dem Innendurchmesser DI kann es sich um einen lichten Innendurchmesser DI handeln. Der Innendurchmesser DI des Schneckenrotors 3 ist vorzugsweise an der Öffnung 9 der ersten Stirnseite 7 vorhanden. Dabei ist der Innendurchmesser DI größer als ein Außendurchmesser DA der Triebwelle 4. Entsprechend kann zwischen der Öffnung 9 und der Triebwelle 4 ein radialer Ringspalt ausgebildet sein. Infolge der Neigung der Triebwelle 4 relativ zur Zentralachse Z kann der Ringspalt entlang der Umfangsrichtung U eine sich bei Aufprägung der Rotationsbewegung ändernde radiale Erstreckung aufweisen. Ein Verhältnis des Innendurchmessers DI zum Außendurchmesser DA beträgt beispielsweise minimal 1,1 bis maximal 5,0. Vorliegend beträgt das Verhältnis des Innendurchmessers DI zum Außendurchmesser DA minimal 1,5 bis maximal 2,5.

Die Triebwelle 4 weist ein Antriebsende 17 auf, welches dem Abtriebsende 6 der Triebwelle 4 gegenüberliegend angeordnet ist. Das Antriebsende 17 ist beispielsweise um die Zentralachse Z der Exzenterschneckenpumpenvorrichtung 1 drehantreibbar. Das Antriebsende 17 dient einer Antriebskopplung der Triebwelle 4. Vorliegend weist die Exzenterschneckenpumpenvorrichtung 1 eine Antriebseinrichtung 20 auf, die zum Antreiben des Schneckenrotors 3 mittels der Triebwelle 4 eingerichtet ist. Zur Antriebskopplung ist vorliegend das Antriebsende 17 der Triebwelle 4 mit der Antriebseinrichtung 20 drehantriebsverbunden.

Das Abtriebsende 6 dient einer, beispielsweise anlenkenden, Anbindung an den Schneckenrotor 3, insbesondere mittels der Anbindungseinrichtung 5. Dabei ist zwischen dem Antriebsende 17 und dem Abtriebsende 6 eine Gelenkwelle 18 der Triebwelle 4 angeordnet. Die Gelenkwelle 18 der Triebwelle 4 weist wenigstens ein Kardangelenk 19, vorliegend genau Kardangelenk 19, auf. Das Kardangelenk 19 ist an der Anbindungseinrichtung 5 angeordnet. Alternativ oder zusätzlich weist die Triebwelle 4 einen winkeltoleranten elastisch verformbaren Abschnitt 21 auf. Vorliegend ist genau ein solcher winkeltoleranter elastisch verformbarer Abschnitt 21 vorhanden, der bei den gezeigten Ausführungsformen eine Hardyscheibe 22 aufweist. Es versteht sich, dass im Vergleich zu den gezeigten Ausführungsformen die Hardyscheibe 22 durch ein zweites Kardangelenk 19 oder das Kardangelenk 19 durch eine zweite Hardyscheibe 22 ersetzbar sind. Die Gelenkwelle 18 und/oder der winkeltolerante elastisch verformbare Abschnitt 21 der Triebwelle 4 sind dazu eingerichtet, einen radialen Versatz zwischen Antriebsende 17 und Abtriebsende 6 auszugleichen. Der radiale Versatz resultiert dabei aus einer Exzentrizität E des Schneckenrotors 3 relativ zum Schneckenstator 2. Die Exzentrizität E bezieht sich dabei insbesondere auf den radialen Versatz zwischen einer Eigenrotationsachse S des Schneckenrotors 3 relativ zum Schneckenstator 2.

Die Rotationsbewegung des Schneckenrotors 3 relativ zum Schneckenstator 2 ist mittels der Triebwelle 4 derart aufprägbar, dass bei einem Drehantreiben des Antriebsendes 17 um die Zentralachse Z der Schneckenrotor 3 eine Eigenrotation um seine Eigenrotationsachse S erfährt, während der Schneckenrotor 3 um die Zentralachse Z umläuft. Der Schneckenrotor 3 dreht sich also bei Drehantreiben des Antriebsendes 17 zum einen um seine Eigenrotationsachse S und läuft zum anderen um die Zentralachse Z, insbesondere in radialem Abstand zur Zentralachse Z exzentrisch, um. Dabei kann die Antriebseinrichtung 20 mit dem Antriebsende 17 der Triebwelle 4 derart antriebsverbunden sein, dass das Antriebsende 17 mittels der Antriebseinrichtung 20 um die Zentralachse Z der Exzenterschneckenpumpenvorrichtung 1 drehantreibbar ist. Mit anderen Worten: Infolge seines Drehantriebs kann der der Schneckenrotor 3 um sich selbst rotieren. Durch eine Formgebung des Schneckenstators 2 und des Schneckenrotors 3 kann der Schneckenrotor 3 dabei eine hyperzykloide Bewegung ausführen und den Bau- und/oder Dickstoff mittels Förderräumen, beziehungsweise Förderkammern, die zwischen dem Schneckenstator 2 und dem Schneckenrotor 3 gebildet sind, durch Verdrängung fördern.

Gemäß Fig. 3 weist das Austragssystem 100 eine Bewegungseinrichtung 54 auf. Die Bewegungseinrichtung 54 ist beispielsweise dazu ausgebildet, die Exzenterschneckenpumpenvorrichtung 1 und/oder die daran vorzugsweise angeordnete Austragsöffnung 101 zu bewegen, insbesondere zu verstellen. Beispielsweise kann die Exzenterschneckenpumpenvorrichtung 1 und/oder die Austragsöffnung 101 mittels der Bewegungseinrichtung 54 automatisch und/oder translatorisch und/oder rotatorisch bewegt werden, insbesondere entlang und/oder um drei Raumachsen eines dreidimensionalen kartesischen Koordinatensystems. Die Austragsöffnung 101 kann an einem Druckkopf angeordnet sein. Vorzugsweise kann die Exzenterschneckenpumpenvorrichtung 1 und/oder die Austragsöffnung 101 mittels der Bewegungseinrichtung 54 relativ zur Zufuhrpumpe 51, insbesondere während der Förderung von Bau- und/oder Dickstoff und/oder während des Austrags und/oder während der Formung von Baustoff, bewegt werden. Beispielsweise kann mittels der Zufuhrpumpe 51 Bau- und/oder Dickstoff wenigstens teilweise, insbesondere vollständig, entlang der Bewegungseinrichtung 54 gefördert werden. Die Bewegungseinrichtung 54 weist dabei vorliegend einen Arm 55, insbesondere einen Verteilermast 56, auf. Der Arm 55 kann mehrachsig, insbesondere mehrgelenkig, ausgebildet sein. Insbesondere ist die Bewegungseinrichtung 54 der Arm 55. Die Exzenterschneckenpumpenvorrichtung 1 und/oder die Austragsöffnung 101 können im Bereich einer Armspitze des Arms 55, insbesondere an einer Mastspitze des Verteilermasts 56, insbesondere unmittelbar, angeordnet und/oder befestigt sein. Die Armspitze und/oder Mastspitze können an einem freien Ende des Arms 55 beziehungsweise des Verteilermasts 56 angeordnet sein.

Beispielsweise sind die Exzenterschneckenpumpenvorrichtung 1, die Zufuhrpumpe 51 und/oder die Bewegungseinrichtung 54, insbesondere unabhängig voneinander, kontrollierbar, beispielsweise elektrisch kontrollierbar. Das Austragssystem 100 kann zu diesem Zweck eine, insbesondere elektrische oder elektronische, Kontrolleinrichtung 60 aufweisen, insbesondere in Form eines Computers. Die Kontrolleinrichtung 60 ist zum, insbesondere automatischen und/oder elektrischen, Kontrollieren der Exzenterschneckenpumpenvorrichtung 1 zur Förderung von Bau- und/oder Dickstoff, der Zufuhrpumpe 51 zur Förderung von Bau- und/oder Dickstoff und/oder der Bewegungseinrichtung 54 zur Bewegung der Exzenterschneckenpumpenvorrichtung 1 und/oder der Austragsöffnung 101 eingerichtet. Insbesondere ist die Kontrolleinrichtung 60 zum Kontrollieren der vorgenannten Komponenten in Abhängigkeit von Daten DBWT, insbesondere einem Bau- beziehungsweise Konstruktionsplan des zu druckenden Bauwerksteils ausgebildet. Die Daten DBWT können in einem Speicher der Kontrolleinrichtung 60 abgelegt sein. Beispielsweise ist die Kontrolleinrichtung 60 zum Kontrollieren der Antriebseinrichtung 20 der Exzenterschneckenpumpenvorrichtung 1 ausgebildet. Die Kontrolleinrichtung 60 kann zum Kontrollieren eines Antriebsmotors der Zufuhrpumpe 51 ausgebildet sein. Die Exzenterschneckenpumpenvorrichtung 1, die Zufuhrpumpe 51 und/oder die Bewegungseinrichtung 54 können, insbesondere jeweils, zum Zusammenwirken mit der Kontrolleinrichtung 60 ausgebildet sein. Der die Austragsöffnung 101 aufweisende Druckkopf kann ebenfalls mit den vorstehenden Komponenten zusammenwirkend mittels der Kontrolleinrichtung 60 kontrollierbar sein.

Beispielsweise weist das Austragssystem 100 ein Fahrgestell 53 auf. Bei dem Austragssystem 100 kann es sich um eine Autobaustoffpumpe 52 handeln, die das Fahrgestell 53 aufweist. Das Fahrgestell 53 trägt die Exzenterschneckenpumpenvorrichtung 1, die Zufuhrpumpe 51, die Austragsöffnung 101, die Bewegungseinrichtung 54 und/oder die Kontrolleinrichtung 60, insbesondere unmittelbar.

## Patentansprüche

1. Exzenterschneckenpumpenvorrichtung (1), aufweisend:
- einen Schneckenstator (2),
- einen in dem Schneckenstator (2) beweglich gelagerten Schneckenrotor (3), und
- eine drehantriebbare Triebwelle (4) zum Aufprägen einer Rotationsbewegung des Schneckenrotors (3) relativ zum Schneckenstator (2) zum Fördern von Bau- und/oder Dickstoff durch den Schneckenstator (2) hindurch,
- wobei die Triebwelle (4), insbesondere axial schräg, in den Schneckenstator (2) hinein oder durch den Schneckenstator (2) hindurch ragt,
- **dadurch gekennzeichnet, dass** die Exzenterschneckenpumpenvorrichtung (1) eine Dichtungseinrichtung (13, 13A, 13B) aufweist, die an dem Schneckenrotor (3) und/oder an der Triebwelle (4) angelegt ist, und einem Eindringen von Bau- und/oder Dickstoff in den Innenraum des Schneckenrotors entgegenwirkt oder ein solches Eindringen sogar vollständig verhindert, und
- wobei ein axial erstreckter Innenraum (10) des Schneckenrotors (3) zum bereichsweisen Aufnehmen der Triebwelle (4) ausgebildet und mit einem inkompressiblen Medium gefüllt ist.

2. Exzenterschneckenpumpenvorrichtung (1) nach dem vorhergehenden Anspruch,
- wobei die Triebwelle (4), insbesondere axial schräg, in den Schneckenrotor (3) hinein oder durch den Schneckenrotor (3) hindurch ragt,
- insbesondere wobei der Schneckenrotor (3) wenigstens baustoffdicht und/oder dickstoffdicht verschlossen ist.

3. Exzenterschneckenpumpenvorrichtung (1) nach einem der vorhergehenden Ansprüche, wobei die Exzenterschneckenpumpenvorrichtung (1) eine Anbindungseinrichtung (5) aufweist, wobei die Anbindungseinrichtung (5) ein Abtriebsende (6) der drehantreibbaren Triebwelle (4), insbesondere kardanisch und/oder winkeltolerant, an den Schneckenrotor (3) anbindet, insbesondere an dem Schneckenrotor (3) lagert.

4. Exzenterschneckenpumpenvorrichtung nach einem der vorhergehenden Ansprüche,
- wobei der Schneckenrotor (3) eine erste Stirnseite (7) und eine der ersten Stirnseite (7) axial gegenüberliegende zweite Stirnseite (8) aufweist,
- wobei die erste Stirnseite (7) eine Öffnung (9) aufweist, mittels welcher ein axial erstreckter Innenraum (10) des Schneckenrotors (3) zum bereichsweisen Aufnehmen der Triebwelle (4) geöffnet ist.

5. Exzenterschneckenpumpenvorrichtung (1) nach den beiden vorhergehenden Ansprüchen,
wobei die Anbindungseinrichtung (5) im, insbesondere axialen, Abstand zu der ersten Stirnseite (7), insbesondere an der zweiten Stirnseite (8) und/oder innerhalb des Innenraums (10), angeordnet ist.

6. Exzenterschneckenpumpenvorrichtung (1) nach einem der beiden vorhergehenden Ansprüche,
- wobei die zweite Stirnseite (8) eine Montageöffnung (11) aufweist, mittels welcher der Innenraum (10) der ersten Stirnseite (7) axial gegenüberliegend durchgangartig geöffnet ist,
- insbesondere wobei die Exzenterschneckenpumpenvorrichtung (1) eine, insbesondere kappenartige, Abdeckung (12) aufweist, mittels welcher die Montageöffnung (11) wenigstens baustoffdicht und/oder dickstoffdicht verschlossen ist.

7. Exzenterschneckenpumpenvorrichtung (1) nach einem der vorhergehenden Ansprüche,
- wobei die , Dichtungseinrichtung (13, 13A, 13B) ringförmig ist und/oder an der Triebwelle (4) umlaufend und/oder radial und/oder axial angelegt ist, und/oder
- wobei das inkompressible Medium eine Flüssigkeit ist.

8. Exzenterschneckenpumpenvorrichtung (1) nach dem vorhergehenden Anspruch,
- wobei die Dichtungseinrichtung (13, 13A, 13B), insbesondere radial und/oder axial, elastisch verformbar ausgebildet ist, um einem mit dem Aufprägen der Rotationsbewegung einhergehenden Taumeln der Triebwelle (4) relativ zum Schneckenrotor (3) nachzugeben,
- insbesondere wobei die Dichtungseinrichtung (13, 13A, 13B) ein, insbesondere geschlossenporiges, Schaumstoffmaterial aufweist und/oder faltenbalgartig ausgebildet ist.

9. Exzenterschneckenpumpenvorrichtung (1) nach einem der vorhergehenden Ansprüche,
- wobei ein, insbesondere lichter, Innendurchmesser (DI) des Schneckenrotors (3), insbesondere an der Öffnung (9) der ersten Stirnseite (7), größer ist als ein Außendurchmesser (DA) der Triebwelle (4),
- insbesondere wobei ein Verhältnis des Innendurchmessers (DI) zum Außendurchmesser (DA) minimal 1,1 bis maximal 5,0, insbesondere minimal 1,5 bis maximal 2,5, beträgt.

10. Exzenterschneckenpumpenvorrichtung (1) nach einem der vorhergehenden Ansprüche,
- wobei die Triebwelle (4) ein, insbesondere um eine Zentralachse (Z) der Exzenterschneckenpumpenvorrichtung (1) drehantreibbares, Antriebsende (17) zur Antriebskopplung und ein dem Antriebsende (17) gegenüberliegendes Abtriebsende (6) zur, insbesondere anlenkenden, Anbindung an den Schneckenrotor (3) aufweist,
- wobei das Antriebsende (17) und das Abtriebsende (6) miteinander mittels einer Gelenkwelle (18) der Triebwelle (4), insbesondere aufweisend wenigstens ein Kardangelenk (19), und/oder mittels eines winkeltoleranten elastisch verformbaren Abschnitts (21) der Triebwelle (4), insbesondere aufweisend eine Hardyscheibe (22), verbunden sind, um einen radialen Versatz zwischen Antriebsende (17) und Abtriebsende (6) auszugleichen, wobei der radiale Versatz aus einer Exzentrizität (E) des Schneckenrotors (3), insbesondere einer Eigenrotationsachse (S) des Schneckenrotors (3), relativ zum Schneckenstator (2) resultiert.

11. Exzenterschneckenpumpenvorrichtung (1) nach dem vorhergehenden Anspruch, wobei die Rotationsbewegung des Schneckenrotors (3) relativ zum Schneckenstator (2) mittels der Triebwelle (4) derart aufprägbar ist, dass bei Drehantreiben des Antriebsendes (17) um die Zentralachse (Z) der Exzenterschneckenpumpenvorrichtung (1) der Schneckenrotor (3) eine Eigenrotation erfährt, während der Schneckenrotor (3) um die Zentralachse (Z), insbesondere in radialem Abstand zur Zentralachse (Z) exzentrisch, umläuft.

12. Exzenterschneckenpumpenvorrichtung (1) nach einem der vorhergehenden Ansprüche,
- wobei die Exzenterschneckenpumpenvorrichtung (1) eine Antriebseinrichtung (20) zum Antreiben des Schneckenrotors (3) mittels der Triebwelle (4) aufweist,
- insbesondere wobei die Antriebseinrichtung (20) mit einem Antriebsende (17) der Triebwelle (4) so antriebsverbunden ist, dass das Antriebsende (17) mittels der Antriebseinrichtung (20) um eine Zentralachse (Z) der Exzenterschneckenpumpenvorrichtung (1) drehantreibar ist.

13. Pumpensystem (50), aufweisend:
- eine Exzenterschneckenpumpenvorrichtung (1) nach einem der vorhergehenden Ansprüche,
- eine Zufuhrpumpe (51), wobei die Zufuhrpumpe (51) zum Fördern von Bau- und/oder Dickstoff zu der Exzenterschneckenpumpenvorrichtung (1), insbesondere zum Ein- oder Auslaufraum (16) der Exzenterschneckenpumpenvorrichtung (1), ausgebildet ist,
- insbesondere wobei das Pumpensystem (50) von der Zufuhrpumpe (51) bis zu der Exzenterschneckenpumpenvorrichtung (1) geschlossen ist.

14. Austragssystem (100) zum Austragen von Bau- und/oder Dickstoff, insbesondere zur Bildung eines Strangs von Bau- und/oder Dickstoff zum 3D-Druck eines Bauwerksteils, wobei das Austragssystem (100) aufweist:
- eine Austragsöffnung (101), wobei die Austragsöffnung (101) zum Austrag von Bau- und/oder Dickstoff, insbesondere zur Bildung des Strangs, aus dem Austragssystem (100) heraus ausgebildet ist, und
- eine Exzenterschneckenpumpenvorrichtung (1) und/oder ein Pumpensystem (50) nach einem der vorhergehenden Ansprüche, wobei die Exzenterschneckenpumpenvorrichtung (1) zur Förderung von Bau- und/oder Dickstoff zu der Austragsöffnung (101), insbesondere zur Dosierung des Austrags von Bau- und/oder Dickstoff aus dem Austragssystem (100) heraus, ausgebildet ist.

15. Verwendung einer Exzenterschneckenpumpenvorrichtung (1) und/oder eines Pumpensystems (50) und/oder eines Austragssystems (100) nach einem der vorhergehenden Ansprüche, insbesondere zum Austrag von Bau- und/oder Dickstoff, insbesondere zum Bau eines Bauwerksteils, insbesondere zur Bildung eines Strangs von Bau- und/oder Dickstoff zum 3D-Druck des Bauwerksteils.

## Claims

1. Eccentric screw pump device (1), having:
- a screw stator (2),
- a screw rotor (3) movably supported in the screw stator (2) and
- a driveshaft (4) that can be driven in rotation for impressing a rotational movement of the screw rotor (3) relative to the screw stator (2) to deliver construction and/or thick material through the screw stator (2),
- wherein the driveshaft (4) projects, in particular axially obliquely, into the screw stator (2) or through the screw stator (2),
- **characterized in that** the eccentric screw pump device (1) has a sealing device (13, 13A, 13B) which is applied to the screw rotor (3) and/or to the driveshaft (4) and counteracts the penetration of construction and/or thick material into the interior of the screw rotor or even completely prevents such penetration, and
- wherein an axially extended interior (10) of the screw rotor (3) is designed to partly accommodate the driveshaft (4) and is filled with an incompressible medium.

2. Eccentric screw pump device (1) according to the preceding claim,
- wherein the driveshaft (4) projects, in particular axially obliquely, into the screw rotor (3) or through the screw rotor (3),
- in particular wherein the screw rotor (3) is closed at least in a construction material-tight and/or thick material-tight manner.

3. Eccentric screw pump device (1) according to one of the preceding claims, wherein the eccentric screw pump device (1) has an attachment device (5), wherein the attachment device (5) attaches an output end (6) of the rotationally drivable driveshaft (4) to the screw rotor (3), in particular cardanically and/or in an angle-tolerant manner, in particular supports the same on the screw rotor (3).

4. Eccentric screw pump device according to one of the preceding claims,
- wherein the screw rotor (3) has a first end face (7) and a second end face (8) axially opposite the first end face (7),
- wherein the first end face (7) has an opening (9), by means of which an axially extended interior (10) of the screw rotor (3) is opened to partly accommodate the driveshaft (4).

5. Eccentric screw pump device (1) according to the two preceding claims,
wherein the attachment device (5) is arranged at an in particular axial distance from the first end face (7), in particular on the second end face (8) and/or within the interior (10).

6. Eccentric screw pump device (1) according to one of the two preceding claims,
- wherein the second end face (8) has a mounting opening (11), by means of which the interior (10) is opened in the manner of a passage axially opposite the first end face (7),
- in particular wherein the eccentric screw pump device (1) has an in particular cap-like cover (12), by means of which the mounting opening (11) is closed at least in a construction material-tight and/or thick material-tight manner.

7. Eccentric screw pump device (1) according to one of the preceding claims,
- wherein the sealing device (13, 13A, 13B) is annular and/or is applied to the driveshaft (4) circumferentially and/or radially and/or axially, and/or
- wherein the incompressible medium is a liquid.

8. Eccentric screw pump device (1) according to the preceding claim,
- wherein the sealing device (13, 13A, 13B) is elastically deformable, in particular radially and/or axially, in order to yield to wobbling of the driveshaft (4) relative to the screw rotor (3) associated with the impression of the rotational movement,
- in particular wherein the sealing device (13, 13A, 13B) has an in particular closed-pore foam material and/or is formed in the manner of a bellows.

9. Eccentric screw pump device (1) according to one of the preceding claims,
- wherein an in particular clear internal diameter (DI) of the screw rotor (3), in particular at the opening (9) of the first end face (7), is larger than an external diameter (DA) of the driveshaft (4),
- in particular wherein a ratio of the internal diameter (DI) to the external diameter (DA) is a minimum of 1.1 to a maximum of 5.0, in particular a minimum of 1.5 to a maximum of 2.5.

10. Eccentric screw pump device (1) according to one of the preceding claims,
- wherein the driveshaft (4) has a drive end (17) which can in particular be driven in rotation about a central axis (Z) of the eccentric screw pump device (1) for drive coupling and an output end (6) opposite the drive end (17) for the in particular articulated attachment to the screw rotor (3),
- wherein the drive end (17) and the output end (6) are connected to each other by means of an articulated shaft (18) of the driveshaft (4), in particular having at least one cardan joint (19), and/or by means of an angle-tolerant elastically deformable portion (21) of the driveshaft (4), in particular having a Hardy disc (22), in order to compensate for a radial offset between the drive end (17) and the output end (6), wherein the radial offset results from an eccentricity (E) of the screw rotor (3), in particular of an own axis of rotation (S) of the screw rotor (3), relative to the screw stator (2).

11. Eccentric screw pump device (1) according to the preceding claim,
wherein the rotational movement of the screw rotor (3) relative to the screw stator (2) can be impressed by means of the driveshaft (4) in such a way that when the drive end (17) is driven in rotation about the central axis (Z) of the eccentric screw pump device (1), the screw rotor (3) experiences its own rotation, while the screw rotor (3) rotates about the central axis (Z), in particular eccentrically at a radial distance from the central axis (Z).

12. Eccentric screw pump device (1) according to one of the preceding claims,
- wherein the eccentric screw pump device (1) has a drive device (20) to drive the screw rotor (3) by means of the driveshaft (4),
- in particular wherein the drive device (20) has a drive connection to a drive end (17) of the driveshaft (4) such that the drive end (17) can be driven in rotation about a central axis (Z) of the eccentric screw pump device (1) by means of the drive device (20).

13. Pump system (50), having:
- an eccentric screw pump device (1) according to one of the preceding claims,
- a feed pump (51), wherein the feed pump (51) is designed to deliver construction and/or thick material to the eccentric screw pump device (1), in particular to the inlet or outlet chamber (16) of the eccentric screw pump device (1),
- in particular wherein the pump system (50) is closed from the feed pump (51) as far as the eccentric screw pump device (1).

14. Discharge system (100) for discharging construction and/or thick material, in particular for forming a strand of construction and/or thick material for the 3D printing of a building component, wherein the discharge system (100) has:
- a discharge opening (101), wherein the discharge opening (101) is designed to discharge construction and/or thick material, in particular for forming the strand, from the discharge system (100), and
- an eccentric screw pump device (1) and/or a pump system (50) according to one of the preceding claims, wherein the eccentric screw pump device (1) is designed to deliver construction and/or thick material to the discharge opening (101), in particular to meter the discharge of construction and/or thick material from the discharge system (100).

15. Use of an eccentric screw pump device (1) and/or a pump system (50) and/or a discharge system (100) according to one of the preceding claims, in particular to discharge construction and/or thick material, in particular for the construction of a building component, in particular for forming a strand of construction and/or thick material for the 3D printing of the building component.

## Revendications

1. Dispositif de pompe à vis sans fin excentrique (1), comportant :
- un stator à vis sans fin (2),
- un rotor à vis sans fin (3) monté de manière mobile dans le stator à vis sans fin (2), et
- un arbre d'entraînement (4) pouvant être entraîné en rotation pour imprimer un mouvement de rotation du rotor à vis sans fin (3) par rapport au stator à vis sans fin (2) pour transporter un matériau de construction et/ou un matériau épais à travers le stator à vis sans fin (2),
- l'arbre d'entraînement (4) dépassant, en particulier à l'oblique axialement, dans le stator à vis sans fin (2) ou à travers le stator à vis sans fin (2),
- **caractérisé en ce que** le dispositif de pompe à vis sans fin excentrique (1) comporte un système d'étanchéité (13, 13A, 13B), qui est placé sur le rotor à vis sans fin (3) et/ou sur l'arbre d'entraînement (4) et qui s'oppose à une pénétration de matériau de construction et/ou de matériau épais dans l'espace intérieur du rotor à vis sans fin voire l'empêche totalement, et
- un espace intérieur (10) s'étendant axialement du rotor à vis sans fin (3) étant formé pour recevoir par endroits l'arbre d'entraînement (4) et étant rempli d'un milieu incompressible.

2. Dispositif de pompe à vis sans fin excentrique (1) selon la revendication précédente,
- l'arbre d'entraînement (4) dépassant, en particulier axialement à l'oblique, dans le rotor à vis sans fin (3) ou à travers le rotor à vis sans fin (3),
- en particulier le rotor à vis sans fin (3) étant fermé au moins de manière étanche aux matériaux de construction et/ou aux matériaux épais.

3. Dispositif de pompe à vis sans fin excentrique (1) selon l'une des revendications précédentes, le dispositif de pompe à vis sans fin excentrique (1) comportant un système de raccordement (5), le système de raccordement (5) raccordant une extrémité de sortie (6) de l'arbre d'entraînement (4) pouvant être entraîné en rotation, en particulier par cardan et/ou avec une tolérance angulaire, au rotor à vis sans fin (3), en particulier la montant sur le rotor à vis sans fin (3).

4. Dispositif de pompe à vis sans fin excentrique selon l'une des revendications précédentes,
- le rotor à vis sans fin (3) comportant un premier côté frontal (7) et un deuxième côté frontal (8) axialement opposé au premier côté frontal (7),
- le premier côté frontal (7) comportant une ouverture (9), par laquelle un espace intérieur (10) s'étendant axialement du rotor à vis sans fin (3) est ouvert pour recevoir par endroits l'arbre d'entraînement (4)

5. Dispositif de pompe à vis sans fin excentrique (1) selon les deux revendications précédentes,
le système de raccordement (5) étant disposé à une certaine distance, en particulier axiale, du premier côté frontal (7), en particulier sur le deuxième côté frontal (8) et/ou à l'intérieur de l'espace intérieur (10).

6. Dispositif de pompe à vis sans fin excentrique (1) selon l'une des deux revendications précédentes,
- le deuxième côté frontal (8) comportant une ouverture de montage (11), par laquelle l'espace intérieur (10) du premier côté frontal (7) est ouvert de manière semblable à un passage à l'opposé axialement,
- en particulier le dispositif de pompe à vis sans fin excentrique (1) comportant un couvercle (12), en particulier en forme de capuchon, au moyen duquel l'ouverture de montage (11) est fermée au moins de manière étanche aux matériaux de construction et/ou aux matériaux épais.

7. Dispositif de pompe à vis sans fin excentrique (1) selon l'une des revendications précédentes,
- le système d'étanchéité (13, 13A, 13B) étant annulaire et/ou posé en périphérie et/ou radialement et/ou axialement sur l'arbre d'entraînement (4), et/ou
- le milieu incompressible étant un liquide.

8. Dispositif de pompe à vis sans fin excentrique (1) selon la revendication précédente,
- le système d'étanchéité (13, 13A, 13B) étant formé de manière à être élastiquement déformable, en particulier radialement et/ou axialement, pour céder à une oscillation de l'arbre d'entraînement (4) par rapport au rotor à vis sans fin (3), cette oscillation s'accompagnant de l'impression du mouvement de rotation,
- en particulier le système d'étanchéité (13, 13A, 13B) comportant un matériau en mousse, en particulier à pores fermés, et/ou étant formé à la manière d'un soufflet.

9. Dispositif de pompe à vis sans fin excentrique (1) selon l'une des revendications précédentes,
- un diamètre intérieur (DI), en particulier libre, du rotor à vis sans fin (3), en particulier sur l'ouverture (9) du premier côté frontal (7), étant supérieur à un diamètre extérieur (DA) de l'arbre d'entraînement (4),
- en particulier un rapport du diamètre intérieur (DI) au diamètre extérieur (DA) allant au minimum de 1,1 à 5,0 au maximum, en particulier au minimum de 1,5 à 2,5 au maximum.

10. Dispositif de pompe à vis sans fin excentrique (1) selon l'une des revendications précédentes,
- l'arbre d'entraînement (4) comportant une extrémité d'entraînement (17) pouvant être entraînée en rotation autour d'un axe central (Z) du dispositif de pompe à vis sans fin excentrique (1) pour le couplage en entraînement, et une extrémité de sortie (6) opposée à l'extrémité d'entraînement (17) pour le raccordement, en particulier par articulation, au rotor à vis sans fin (3),
- l'extrémité d'entraînement (17) et l'extrémité de sortie (6) étant reliées l'une à l'autre au moyen d'un arbre à cardan (18) de l'arbre d'entraînement (4), comportant en particulier au moins un joint de cardan (19), et/ou au moyen d'une section (21) élastiquement déformable avec une tolérance angulaire de l'arbre d'entraînement (4), comportant en particulier un disque de Hardy (22), pour compenser un décalage radial entre l'extrémité d'entraînement (17) et l'extrémité de sortie (6), le décalage radial résultant d'une excentricité (E) du rotor à vis sans fin (3), en particulier d'un axe de rotation propre (S) du rotor à vis sans fin (3), par rapport au stator à vis sans fin (2).

11. Dispositif de pompe à vis sans fin excentrique (1) selon la revendication précédente,
le mouvement de rotation du rotor à vis sans fin (3) par rapport au stator à vis sans fin (2) pouvant être imprimé au moyen de l'arbre d'entraînement (4) de telle manière que, lorsque l'extrémité d'entraînement (17) est entraînée en rotation autour de l'axe central (Z) du dispositif de pompe à vis sans fin excentrique (1), le rotor à vis sans fin (3) subit une rotation propre, tandis que le rotor à vis sans fin (3) tourne de manière excentrée autour de l'axe central (Z), en particulier à une distance radiale de l'axe central (Z).

12. Dispositif de pompe à vis sans fin excentrique (1) selon l'une des revendications précédentes,
- le dispositif de pompe à vis sans fin excentrique (1) comportant un système d'entraînement (20) pour entraîner le rotor à vis sans fin (3) au moyen de l'arbre d'entraînement (4),
- en particulier le système d'entraînement (20) étant relié en entraînement à une extrémité d'entraînement (17) de l'arbre d'entraînement (4) de telle sorte que l'extrémité d'entraînement (17) peut être entraînée en rotation autour d'un axe central (Z) du dispositif de pompe à vis sans fin excentrique (1) au moyen du système d'entraînement (20).

13. Système de pompe (50), comportant :
- un dispositif de pompe à vis sans fin excentrique (1) selon l'une des revendications précédentes,
- une pompe d'amenée (51), la pompe d'amenée (51) étant formée pour transporter un matériau de construction et/ou un matériau épais vers le dispositif de pompe à vis sans fin excentrique (1), en particulier vers la chambre d'entrée ou de sortie (16) du dispositif de pompe à vis sans fin excentrique (1),
- en particulier le système de pompe (50) étant fermé depuis la pompe d'amenée (51) jusqu'au dispositif de pompe à vis sans fin excentrique (1).

14. Système d'évacuation (100) pour évacuer un matériau de construction et/ou un matériau épais, en particulier pour former un boudin de matériau de construction et/ou de matériau épais pour l'impression 3D d'une pièce d'ouvrage construction, le système d'évacuation (100) comportant :
- une ouverture d'évacuation (101), l'ouverture d'évacuation (101) étant formée pour évacuer du système d'évacuation (100) du matériau de construction et/ou du matériau épais, en particulier pour former le boudin, et
- un dispositif de pompe à vis sans fin excentrique (1) et/ou un système de pompe (50) selon l'une des revendications précédentes, le dispositif de pompe à vis sans fin excentrique (1) étant formé pour transporter du matériau de construction et/ou du matériau épais vers l'ouverture d'évacuation (101), en particulier pour doser l'évacuation de matériau de construction et/ou de matériau épais hors du système d'évacuation (100).

15. Utilisation d'un dispositif de pompe à vis sans fin excentrique (1) et/ou d'un système de pompe (50) et/ou d'un système d'évacuation (100) selon l'une des revendications précédentes, en particulier pour évacuer du matériau de construction et/ou du matériau épais, en particulier pour construire une pièce d'ouvrage de construction, en particulier pour former un boudin de matériau de construction et/ou de matériau épais pour imprimer en 3D la pièce d'ouvrage de construction.
